# EUROPÄISCHE PATENTANMELDUNG

(11) **EP 2 017 128 A1**
(43) Veröffentlichungstag der Anmeldung: **21.01.2009**
(21) Anmeldenummer: 08010168.6
(22) Anmeldetag: 04.06.2008
(51) Int. Cl.: B60R 3/02

(54) **Fahrerkabine eines Fahrzeugs**

(30) Priorität: 17.07.2007 DE 102007033646
(71) Anmelder: HS Genion GmbH, 82205 Gilching (DE)
(72) Erfinder: Plettrichs, Peter, 86854 Amberg (DE)

(57) **Zusammenfassung**

Die Erfindung betrifft eine Fahrerkabine (1) eines Fahrzeugs, vorzugsweise eines Lastkraftwagens mit mindestens einer Fahrerkabinenöffnung (5) und einer Fahrzeugtür (6). Die Fahrzeugtür (6) deckt in einer ersten Position (12) die Fahrerkabinenöffnung (5) ab. In einer zweiten Position (13) gibt die Fahrzeugtür (6) die Fahrerkabinenöffnung (5) frei. Eine Einstiegseinrichtung (7) ist unterhalb der Fahrerkabinenöffnung (5) angeordnet und weist mindestens ein Stufenteil (8) auf. Die Fahrerkabine (1) weist eine Schutzvorrichtung (11) auf, welche die Einstiegseinrichtung (7) in der ersten Position (12) der Fahrzeugtür (6) nicht freigibt und vor einer Benutzung schützt.

## Beschreibung

Die Erfindung betrifft eine Fahrerkabine eines Fahrzeugs, vorzugsweise eines Lastkraftwagens mit mindestens einer Fahrerkabinenöffnung und einer Fahrzeugtür. Die Fahrzeugtür deckt in einer ersten Position die Fahrerkabinenöffnung ab. In einer zweiten Position gibt die Fahrzeugtür die Fahrerkabinenöffnung frei. Eine Einstiegseinrichtung ist unterhalb der Fahrerkabinenöffnung angeordnet und weist mindestens ein Stufenteil auf.

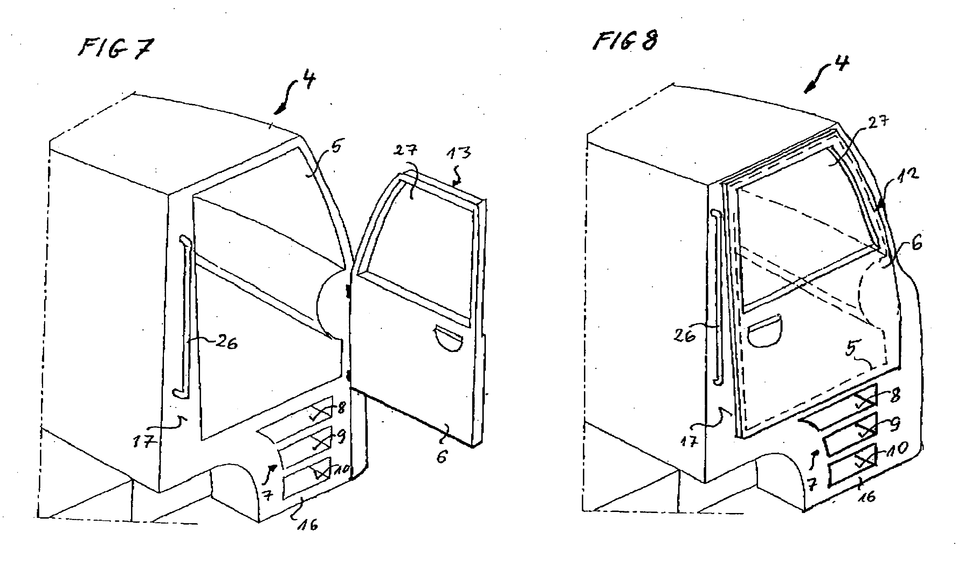

Eine derartige Fahrerkabine ist aus der Druckschrift DE 10 2005 040 904 A1 bekannt. Die Figuren 7 und 8 zeigen schematisch eine derartige Fahrerkabine 4, wobei die Figur 8 eine derartige Fahrerkabine 4 mit einer geschlossenen Fahrzeugtür 6 als erste Position 12 der Fahrzeugtür 6 zeigt und Figur 7 die Fahrerkabine 4 mit einer geöffneten Fahrzeugtür 6 in einer zweiten Position 13 zeigt. Unterhalb der Fahrzeugtür 6 ist eine Einstiegseinrichtung 7 angeordnet, die in einem Einstiegsrahmen 16 drei Stufenteile 8, 9 und 10 aufweist, welche das Einsteigen durch die Fahrerkabinenöffnung 5 in die Fahrerkabine 4 erleichtern soll. Zusätzlich weist die Fahrerkabine 4 auf ihrer Außenkontur 17 einen Handlauf 26 auf, der das Einsteigen in die Fahrerkabine 4 zusätzlich erleichtert.

Figur 8, in der die erste Position 12 der Fahrzeugtür 6 im geschlossenen Zustand gezeigt wird, verdeutlicht die Nachteile derartiger herkömmlicher Fahrerkabinen 4, beispielsweise für Lastkraftwagen. Die Einstiegseinrichtung 7 erleichtert es, in das Innere der Fahrerkabine 4 trotz geschlossener Fahrzeugtür 6, wie es Figur 8 zeigt, einzubrechen, indem die Einstiegseinrichtung 7 mit ihren Stufenteilen 8, 9 und 10 sowie der Handlauf 26 genutzt werden, um in die Höhe der Türscheibe 27 zu gelangen und diese mit Gewalt aufzubrechen. Eine derartige Fahrerkabine 4, wie sie die Figuren 7 und 8 zeigen, bietet somit keinen erhöhten Schutz gegen gewaltsames Eindringen in die Fahrerkabine 4. Zumindest unterstützen die Einstiegseinrichtung 7 und der Handlauf 26 das Aufbrechen bzw. das Einbrechen in die Fahrerkabine 4.

Einen weiteren Nachteil stellt die zerklüftete Außenkontur 17 dar, zumal die Außenkontur 17 durch den Handlauf 26 und den Einstiegsrahmen 16 mit den Aussparungen für die Stufenteile 8, 9 und 10 einen erhöhten Strömungswiderstand bildet, der ein weiterer Nachteil herkömmlicher Fahrerkabinen 4, wie es die Figuren 7 und 8 zeigen, ist.

Aus der Druckschrift DE 30 04 640 A1 ist eine Einstiegsvorrichtung in Form von einer Einstiegstreppe für Schienenfahrzeuge bekannt, wobei die Einstiegsvorrichtung dafür vorgesehen ist, das Einsteigen von unterschiedlichen Bahnsteighöhen zu ermöglichen, indem mindestens zwei bewegliche Trittplatten vorgesehen werden, wobei eine oberste Trittplatte als Hubtrittplatte aus ihrer Ausgangslage, in der sie einen Teil des Fahrzeugbodens bildet, etwa vertikal und parallel zur Fußbodenebene um eine Stufenhöhe nach unten verstellbar ist. Damit können Einstiegseinrichtungen für Schienenfahrzeuge realisiert werden, bei denen in der Regel auf den Straßenbahnstrecken von einem Gehsteig oder einer gehsteigartigen Insel über eine fahrzeugeigene Treppe und auf U-Bahn-Strecken von einem Hochbahnsteig ohne eigentliche Stufe ein- und ausgestiegen werden soll. Derartige Klapptrittplatten als Einstiegseinrichtungen unterstützen zwar die Außenkontur der Schienenfahrzeuge, sind aber für den Einbau in eine Fahrerkabine ungeeignet, da das Absenken der oberen Klapptrittplatte beim Öffnen der Fahrzeugtür den nutzbaren Innenraum einer Fahrerkabine deutlich vermindert.

Aus der Druckschrift JP 58039543 ist eine Einstiegsvorrichtung bekannt, bei der Stufenteile in einer oberen Position während der Bewegung des Fahrzeugs angeordnet werden und in eine untere Position während des Haltens des Fahrzeugs gebracht werden. Eine derartige Einstiegshilfe hätte den Nachteil, dass sie keine Schutzvorrichtung für eine Fahrerkabine darstellt, da sie in der Stoppposition eine Einstiegshilfe zur Verfügung stellt und damit die Einbruchsgefahr erhöht.

Aus der Druckschrift JP 8156690 ist darüber hinaus eine Einstiegseinrichtung unterhalb einer Fahrzeugtür bekannt, die zwei Zustände einnehmen kann, nämlich eine eingezogene Stellung, bei der die äußere Erscheinung der Einstiegshilfe eine aerodynamische Verbesserung darstellt, und einen ausgefahrenen Zustand, bei dem unter der Tür zwei zusätzliche Stufenteile nach unten ausgeklappt sind. Auch in diesem Fall würde die Einstiegseinrichtung ein Einbrechen in ein Fahrzeug bzw. in eine Fahrerkabine erleichtern.

Aufgabe der Erfindung ist es, eine Fahrerkabine zu schaffen, die einen verbesserten Schutz vor dem gewaltsamen Eindringen von Unbefugten in die Fahrerkabine aufweist. Dabei soll insbesondere im Stillstand des Fahrzeugs dem möglichen Einbrecher keine Einstiegshilfe zur Verfügung stehen.

Diese Aufgabe wird mit dem Gegenstand des unabhängigen Anspruchs 1 gelöst. Vorteilhafte Weiterbildungen der Erfindung ergeben sich aus den abhängigen Ansprüchen.

Erfindungsgemäß wird eine Fahrerkabine eines Fahrzeugs, vorzugsweise eines Lastkraftwagens mit mindestens einer Fahrerkabinenöffnung und einer Fahrzeugtür geschaffen. Die Fahrzeugtür deckt in einer ersten Position die Fahrerkabinenöffnung ab. In einer zweiten Position gibt die Fahrzeugtür die Fahrerkabinenöffnung frei. Eine Einstiegseinrichtung ist unterhalb der Fahrerkabinenöffnung angeordnet und weist mindestens ein Stufenteil auf. Die Fahrerkabine weist eine Schutzvorrichtung auf, welche die Einstiegseinrichtung in der ersten Position der Fahrzeugtür nicht freigibt und vor einem Missbrauch durch Dritte schützt und erste in der zweiten Position der Fahrertür einen Einstieg in die Fahrerkabine ermöglicht.

Eine derartige Schutzvorrichtung hat den Vorteil, dass das Eindringen in eine Fahrerkabine eines Fahrzeugs für einen Unbefugten deutlich erschwert wird, zumal die Einstiegseinrichtung bei geschlossener Fahrzeugtür nicht mehr von außen nutzbar ist. Das Hochklettern an der Fahrerkabine wird somit für den Einbrecher deutlich erschwert, so dass ein Schutz gegen ein schnelles Eindringen in eine Fahrzeugkabine eines stehenden Fahrzeugs geschaffen wird. Außerdem erhöht es die Sicherheit der Insassen innerhalb der Fahrerkabine, insbesondere bei Lastkraftwagen, deren Fahrern Ruhepausen vorgeschrieben sind und die aus diesem Grund vermehrt ihre Lastkraftwagen einparken müssen.

Eine weitere Ausführungsform der Erfindung sieht vor, dass die Fahrzeugtür als Schutzvorrichtung eine Schürze aufweist, welche die Einstiegsseinrichtung abdeckt, wenn die Fahrzeugtür in der ersten Position ist und die Einstiegseinrichtung freigibt, wenn die Fahrzeugtür die zweite Position einnimmt. Dabei kann die Schürze so gestaltet werden, dass sie praktisch eine Verlängerung der Fahrzeugtür in Richtung auf die Einstiegseinrichtung darstellt, wodurch gleichzeitig die Außenkontur der Fahrerkabine eine aerodynamisch günstige Form annehmen kann, zumal die Gestaltung aus Fahrzeugtür und Schürze sich vollkommen der Außenkontur der Fahrerkabine angleichen kann. Nur wenn die Fahrzeugtür zum Ein- und Aussteigen geöffnet wird, wird die Einstiegseinrichtung freigegeben und kann benutzt werden. Bei geschlossener Fahrzeugtür ergibt sich eine nach außen hin glatte Oberfläche, an der ein Hochklettern deutlich erschwert ist.

In einer weiteren Ausführungsform der Erfindung kann die Schutzvorrichtung mindestens ein bewegliches Stufenteil aufweisen. In einer Schutzstellung ist das Stufenteil bündig zu der Außenkontur der Fahrerkabine angeordnet, wenn die Fahrzeugtür die erste Position einnimmt. Ferner ist das Stufenteil in eine horizontale Trittstellung bewegbar, wenn die Fahrzeugtür die zweite Position einnimmt. Wenn folglich das Fahrzeug steht und die Fahrzeugtür der Fahrerkabine geschlossen ist, ergibt sich keine Möglichkeit, auf einfache Weise an der Fahrzeugkabine hochzuklettern, da grundsätzlich bei geschlossener Fahrzeugtür das Stufenteil nicht zur Verfügung steht, sondern vielmehr die Außenkontur der Fahrerkabine komplettiert. Dieses hat auch Vorteile, wenn sich das Fahrzeug bewegt, da die mit den Figuren 7 und 8 gezeigten Einstiegsvorrichtungen nun nicht mehr Verwirbelungen und eine Erhöhung des aerodynamischen Widerstands verursachen, zumal nun in der Schutzstellung das mindestens eine Stufenteil bündig zur Außenkontur der Fahrerkabine angeordnet ist.

Dazu weist die Einstiegsvorrichtung vorzugsweise einen Klappmechanismus für das Stufenteil auf, um die Schutzstellung oder die Trittstellung jeweils bereitzustellen. Andererseits ist es auch möglich, dass die Einstiegsvorrichtung einen Drehmechanismus für das Stufenteil aufweist oder einen Schiebemechanismus besitzt, um die Schutzstellung oder die Trittstellung einzunehmen.

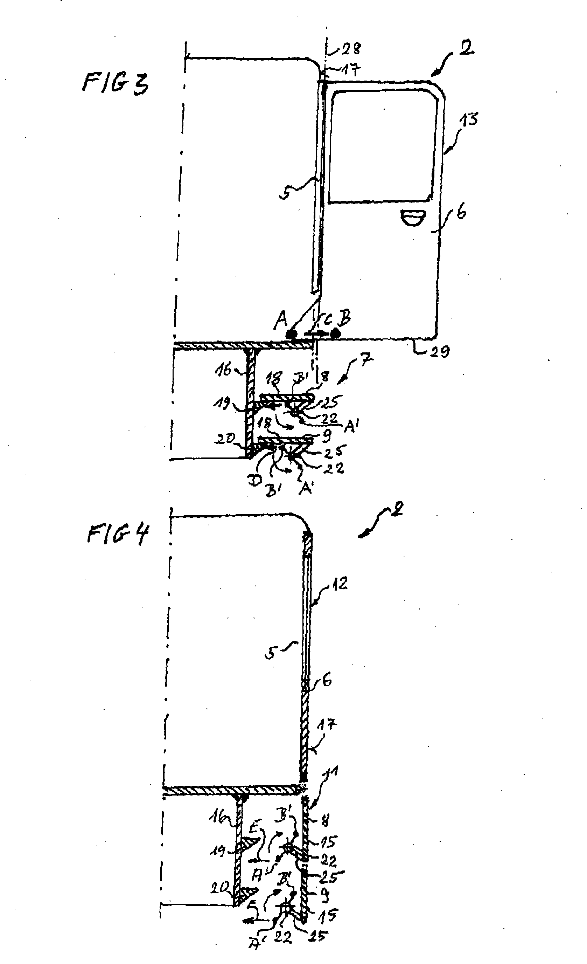

In einer weiteren Ausführungsform der Erfindung wird vorgeschlagen, die Einstiegseinrichtung mit einer Kinematik vorzusehen, die mindestens zwei aus der Gruppe von Klappmechanismus, Drehmechanismus, Schwenkmechanismus oder Schiebemechanismus aufweist, um die Schutzstellung oder die Trittstellung des Stufenteils bereitzustellen. In den nachfolgenden Figuren 3 bis 6 werden entspre-chende Ausführungsformen vorgestellt.

Darüber hinaus ist es vorgesehen, dass die Einstiegseinrichtung einen Einstiegsrahmen aufweist, an dem mindestens ein Ansatz vorgesehen ist, auf dem sich das Stufenteil in der Trittstellung abstützt. Dieses hat den Vorteil, dass die Belastung des Stufenteils in der Trittstellung auf den Einstiegsrahmen über den Ansatz übertragen werden kann und damit die Verstell-Kinematik für das Stufenteil in der Trittstellung entlastet wird. In einer weiteren Ausführungsform der Erfindung weist die Einstiegseinrichtung mehrere Stufenteile auf, so dass bei geöffneter Fahrzeugtür in der zweiten Position der Einstieg erleichtert wird.

Um die Kopplung zwischen der Fahrzeugtür und der Einstiegseinrichtung mit bewegbarem Stufenteil zu ermöglichen, ist in einer Ausführungsform der Erfindung für die Fahrerkabine mindestens ein Bowdenzug vorgesehen, dessen eines Ende an die Fahrzeugtür in einem Abstand zur Schwenkachse der Fahrzeugtür angelenkt ist und mit dem anderen Ende einen Hebelmechanismus des bewegbaren Stufenteils beim Öffnen und Schließen der Fahrzeugtür betätigt.

Eine weitere Ausführungsform der Erfindung sieht vor, dass die Einstiegseinrichtung eine Antriebsvorrichtung zum Bewegen des Stufenteils aufweist. Diese Antriebsvorrichtung kann ein elektrisch, pneumatisch oder hydraulisch betreibbares Stellglied aufweisen. Um die Betätigung des Stellglieds bzw. um die Antriebsvorrichtung auszulösen, ist für die Schutzvorrichtung ein Steuergerät vorgesehen, das mit der Einstiegseinrichtung und der Fahrzeugtür zusammenwirkt. Dieses Steuergerät ist mit unterschiedlichen Sensoren verbunden, welche den Zustand der Fahrzeugtür und den Zustand des bewegten Stufenteils dem Steuergerät signalisieren, so dass dieses die Antriebsvorrichtung bzw. das Stellglied mit Schaltimpulsen versehen kann, um die Trittstellung bzw. die Schutzstellung mit den Positionen der Fahrzeugtür zu synchronisieren.

Weiterhin ist es in einer weiteren Ausführungsform der Erfindung vorgesehen, dass unterhalb des Stufenteils eine horizontale Welle parallel zur Außenkontur angeordnet ist, die mit dem Stufenteil und mindestens einem Schwenkarm starr verbunden ist, wobei der Schwenkarm außerhalb des Trittbereichs des Stufenteils angeordnet ist und mit der Antriebsvorrichtung oder dem Bowdenzug gelenkig verbunden ist. Diese Konstruktion hat den Vorteil, dass mit einer einfachen Schwenkbewegung die Schutzstellung des beweglichen Stufenteils eingenommen werden kann.

Weiterhin ist die Fahrerkabine sowohl aerodynamisch als auch sicherheitstechnisch dadurch verbessert, dass der in Figur 7 und 8 gezeigte Handlauf nicht mehr außen an der Außenkontur der Fahrerkabine angeordnet ist, sondern vielmehr die Einstiegseinrichtung einen Handlauf als Einstiegshilfe aufweist, der im Bereich der Fahrerkabinenöffnung angeordnet ist und in der ersten Position der Fahrzeugtür von dieser abgedeckt ist. Erst beim Öffnen der Fahrzeugtür wird der Handlauf zugänglich und kann als Einstiegshilfe dienen. Ferner kann der Handlauf, um die Fahrerkabinenöffnung nicht zu verkleinern, derart ausgeführt sein, dass er in der zweiten Position der Fahrzeugtür aus der Fahrerkabinenöffnung ausschwenkbar oder herausschiebbar ist.

Die Erfindung wird nun anhand der beigefügten Figuren näher erläutert.
- Figur 1: zeigt eine schematische perspektivische Ansicht einer Hälfte einer Fahrerkabine einer ersten Ausführungsform der Erfindung mit einer geöffneten Fahrzeugtür;
- Figur 2: zeigt eine schematische perspektivische Ansicht der Hälfte der Fah- rerkabine gemäß Figur 1 mit einer geschlossenen Fahrzeugtür;
- Figur 3: zeigt einen schematischen Querschnitt durch eine Hälfte einer Fah- rerkabine einer zweiten Ausführungsform der Erfindung mit einer ge- öffneten Fahrzeugtür;
- Figur 4: zeigt einen schematischen Querschnitt durch die Hälfte der Fahrer- kabine gemäß Figur 3 mit einer geschlossenen Fahrzeugtür;
- Figur 5: zeigt einen schematischen Querschnitt durch eine Hälfte einer Fah- rerkabine einer dritten Ausführungsform der Erfindung mit einer ge- öffneten Fahrzeugtür;
- Figur 6: zeigt einen schematischen Querschnitt durch die Hälfte der Fahrer- kabine gemäß Figur 5 mit einer geschlossenen Fahrzeugtür;
- Figur 7: zeigt eine schematische perspektivische Ansicht einer Hälfte einer Fahrerkabine gemäß dem Stand der Technik mit einer geöffneten Fahrzeugtür;
- Figur 8: zeigt eine schematische perspektivische Ansicht der Hälfte der Fah- rerkabine gemäß dem Stand der Technik mit einer geschlossenen Fahrzeugtür.

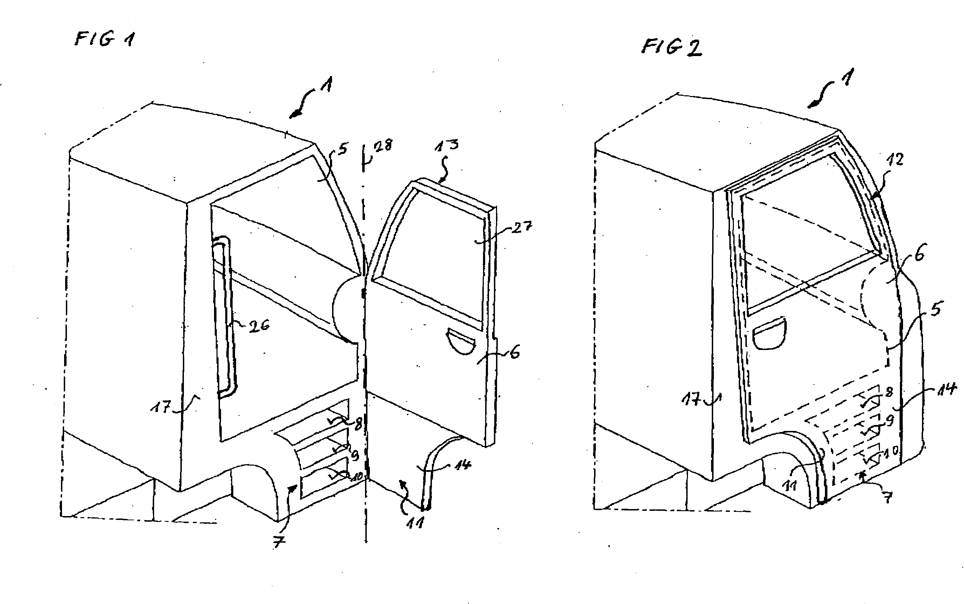

Figur 1 zeigt eine schematische perspektivische Ansicht einer Hälfte einer Fahrerkabine 1 einer ersten Ausführungsform der Erfindung mit einer geöffneten Fahrzeugtür 6. Diese Fahrzeugtür 6 dient zunächst dazu, eine Fahrzeugkabinenöffnung 5 durch Schwenken der Fahrzeugtür 6 aus der geöffneten Position 13 in eine in Figur 2 gezeigte geschlossene Position 12 um die Schwenkachse 28 zu schwenken und zu schließen. Diese Fahrzeugtür 6 weist eine Schürze 14 auf, welche die Fahrzeugtür 6 nach unten verlängert und somit eine Schutzvorrichtung 11 bildet, welche die Einstiegseinrichtung 7, die an der Fahrzeugkabine 1 unterhalb der Fahrzeugkabinenöffnung 5 angeordnet ist, beim Schließen der Fahrzeugtür 6 vollständig abdeckt, so dass keine Möglichkeit besteht, von außen die Stufenteile 8, 9 und 10 bei geschlossener Fahrzeugtür 6 zu erreichen.

Ferner zeigt Figur 1, dass der im Stand der Technik gemäß den Figuren 7 und 8 auf der Außenkontur 17 angebrachte Handlauf 26 nun in der Fahrerkabinenöffnung 5 angeordnet ist, so dass auch diese Einstiegshilfe in Form eines Handlaufs 26 bei geschlossener Fahrzeugtür 6 nicht mehr zur Verfügung steht. Mit einer derartigen Konstruktion der Fahrerkabine 1 wird eine Schutzvorrichtung 11 verwirklicht, bei der sich die Außenkontur der Fahrzeugtür an die Außenkontur 17 der Fahrerkabine 1 anpasst und gleichzeitig keine Möglichkeit zulässt, an der Fahrerkabine 1 hochzuklettern, um beispielsweise die Türscheibe 27 gewaltsam zu zerstören und in die Fahrerkabine 1 einzudringen.

Figur 2 zeigt eine schematische perspektivische Ansicht der Hälfte der Fahrerkabine 1 gemäß Figur 1 mit einer geschlossenen Fahrzeugtür 6. Die nun durch die Schürze 14 der Fahrzeugtür 6 abgedeckte Einstiegseinrichtung 7 ist durch gestrichelte Linien gekennzeichnet, ebenso wie die Fahrerkabinenöffnung 5. Komponenten mit gleichen Funktionen wie in Figur 1 werden mit gleichen Bezugszeichen gekennzeichnet und nicht extra erörtert. Neben der Verbesserung des Schutzes der Fahrerkabine 1 gegen gewaltsames Eindringen wird mit der in Figur 2 gezeigten Ansicht bei geschlossener Fahrzeugtür 6 auch deutliche, dass der Strömungswiderstand durch die Schürze 14 verbessert wird, da die Stufenteile 8, 9 und 10 nun strömungsgünstig abgedeckt sind.

Figur 3 zeigt einen schematischen Querschnitt durch eine Hälfte einer Fahrerkabine 2 gemäß einer zweiten Ausführungsform der Erfindung mit einer geöffneten Fahrzeugtür 6. An der Bodenkante 29 der Fahrzeugtür 6 sind zwei Anlenkpunkte A und B angeordnet, wobei der Anlenkpunkt A beim Schwenken der Fahrzeugtür 6 um die Schwenkachse 28 eine Zugkraft auf einen Seilzug beim Schließen der Fahrzeugtür 6 ausüben kann, während der Anlenkpunkt B beim Öffnen der Fahrzeugtür eine Zugkraft in Pfeilrichtung C auf einen Seilzug ausübt und damit die Anlenkpunkte B' der um eine Welle 22 schwenkbaren Stufenteile 8 und 9 in die in Figur 3 gezeigte Trittstellung drängt. Beim Schwenken der Stufenteile 8 und 9, die über einen Schwenkarm 25 starr mit der Welle 22 verbunden sind, in die Trittposition stützen sich die Stufenteile 8 und 9 auf den Ansätzen 19 und 20, die mit einem Einstiegsrahmen 16 starr verbunden sind, ab. Dadurch wird die Trittfestigkeit der Stufenteile 8 und 9 gesichert.

Die Anlenkpunkte A' der Stufenteile 8 und 9 können beispielsweise über einen Seilzug mit dem Anlenkpunkt A im Bereich der Unterkante 29 der Fahrzeugtür 6 verbunden sein, so dass beim Schließen der Fahrzeugtür 6 die Anlenkpunkte A' in die in Figur 4 gezeigte Schutzstellung 15 in Pfeilrichtung E übergehen.

Anstelle von zwei Seilzügen, die jeweils an den Punkten A und B der Fahrzeugtür 6 angelenkt sind, kann auch ein einzelner Bowdenzug eingesetzt werden, der lediglich den Punkt B an der Fahrzeugtür erfordert und mit dem Anlenkpunkten B' der Stufenteile 8 und 9 verbunden ist, da ein Bowdenzug sowohl Druckkräfte in begrenztem Maß als auch Zugkräfte übertragen kann, und somit die Stufenteile 8 und 9 in eine Trittposition oder eine Schutzposition schwenken kann.

Figur 4 zeigt einen schematischen Querschnitt durch die Hälfte der Fahrerkabine 2 gemäß Figur 3 mit einer geschlossenen Fahrzeugtür 6. Gleichzeitig mit dem Schließen der Fahrzeugtür 6 und damit dem Verschließen der Fahrerkabinenöffnung 5 in der Fahrerkabine 2 werden auch die Stufenteile 8 und 9 der Schutzvorrichtung 11 in eine Schutzstellung 15 geschwenkt, so dass sie bündig zu der Außenkontur 17 der Fahrerkabine 2 ausgerichtet sind.

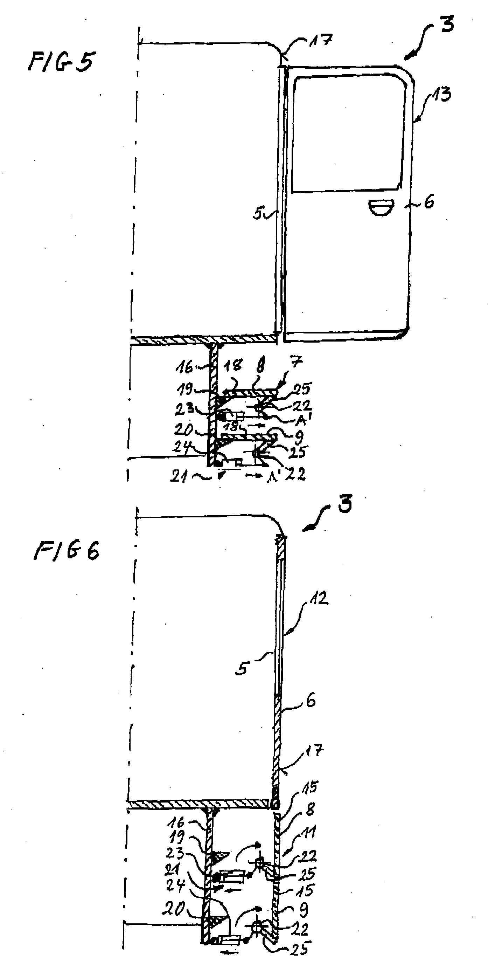

Figur 5 zeigt einen schematischen Querschnitt durch eine Hälfte einer Fahrerkabine 3 einer dritten Ausführungsform der Erfindung mit einer geöffneten Fahrzeugtür 6. Komponenten mit gleichen Funktionen wie in den vorhergehenden Figuren werden mit gleichen Bezugszeichen gekennzeichnet und nicht extra erörtert. Der Unterschied dieser dritten Ausführungsform der Erfindung zu der zweiten Ausführungsform der Erfindung besteht darin, dass an der Fahrzeugtür keine Anlenkpunkte A oder B vorgesehen sind, sondern lediglich Sensoren, welche die erste Position 12 und die zweite Position 13 der Fahrzeugtür 6 detektieren. Über ein Steuergerät werden Stellglieder 23 und 24 einer Antriebsvorrichtung 21 betätigt.

Diese bringen die bewegbaren Stufenteile 8 und 9 in die jeweilige Endposition, so dass, wie in Figur 5 gezeigt, nun die Stufenteile 8 und 9 in ihrer Trittstellung, unterstützt von den Ansätzen 19 und 20, verbleiben.

Figur 6 zeigt einen schematischen Querschnitt durch die Hälfte der Fahrerkabine 3 gemäß Figur 5 mit einer geschlossenen Fahrzeugtür 6. Dabei erregt ein Sensor, der das Schließen der Fahrzeugtür 6 feststellt, die Stellglieder 23 und 24 derart an, dass sie eine zweite Stellung einnehmen und die Stufenteile 8 und 9 in eine Schutzstellung 15 schwenken, so dass die Stufenteile 8 und 9 eine Schutzvorrichtung 11 für die Fahrerkabine 3 bilden.

Anstelle der in Figur 5 und 6 gezeigten hydraulischen oder pneumatischen Zylinderstellglieder 23 und 24 können auch elektromagnetische Schaltelemente die Trittstellung 18 bzw. die Schutzstellung 15 der Stufenteile 8 und 9 bewirken.

Die Figuren 7 und 8 zeigen schematische perspektivische Ansichten einer Hälfte einer Fahrerkabine 4 gemäß dem Stand der Technik und wurden bereits im einleitenden Teil dieser Patentanmeldung detailliert beschrieben, so dass auf eine Wiederholung an dieser Stelle verzichtet wird.

### Bezugszeichenliste

- 1: Fahrerkabine (erste Ausführungsform)
- 2: Fahrerkabine (zweite Ausführungsform)
- 3: Fahrerkabine (dritte Ausführungsform)
- 4: Fahrerkabine (Stand der Technik)
- 5: Fahrerkabinenöffnung
- 6: Fahrzeugtür
- 7: Einstiegseinrichtung
- 8: Stufenteil
- 9: Stufenteil
- 10: Stufenteil
- 11: Schutzvorrichtung
- 12: erste Position der Fahrzeugtür
- 13: zweite Position der Fahrzeugtür
- 14: Schürze der Fahrzeugtür
- 15: Schutzstellung des Stufenteils
- 16: Einstiegsrahmen
- 17: Außenkontur
- 18: Trittstellung des Stufenteils
- 19: Ansatz
- 20: Ansatz
- 21: Antriebsvorrichtung
- 22: Welle
- 23: Stellglied
- 24: Stellglied
- 25: Schwenkarm
- 26: Handlauf
- 27: Türscheibe
- 28: Schwenkachse
- 29: Bodenkante

## Patentansprüche

1. Fahrerkabine eines Fahrzeugs, vorzugsweise eines Lastkraftwagens mit
- mindestens einer Fahrerkabinenöffnung (5),
- einer Fahrzeugtür (6), welche in einer ersten Position (12) die Fahrerkabinenöffnung (5) abdeckt und in einer zweiten Position (13) die Fahrerkabinenöffnung (5) freigibt;
- einer Einstiegseinrichtung (7), die unterhalb der Fahrerkabinenöffnung (5) angeordnet ist, und mindestens ein Stufenteil (8) aufweist
**dadurch gekennzeichnet, dass** die Fahrerkabine (1) eine Schutzvorrichtung (11) aufweist, welche die Einstiegseinrichtung (7) in der ersten Position (12) der Fahrzeugtür (6) nicht freigibt und vor einer Benutzung schützt.

2. Fahrerkabine nach Anspruch 1,
**dadurch gekennzeichnet, dass**
die Fahrzeugtür (6) als Schutzvorrichtung (11) eine Schürze (14) aufweist, welche die Einstiegsseinrichtung (7) abdeckt, wenn die Fahrzeugtür (6) in der ersten Position (12) ist und die Einstiegseinrichtung (7) freigibt, wenn die Fahrzeugtür (6) die zweite Position (13) einnimmt.

3. Fahrerkabine nach Anspruch 1,
**dadurch gekennzeichnet, dass**
die Schutzvorrichtung (11) ein bewegliches Stufenteil (8) aufweist, wobei das Stufenteil (8) in einer Schutzstellung (15) bündig zu der Außenkontur (17) der Fahrerkabine (2) angeordnet ist, wenn die Fahrzeugtür (6) die erste Position (12) einnimmt und das Stufenteil (8, 9) in eine horizontale Trittstellung (18) bewegbar ist, wenn die Fahrzeugtür (6) die zweite Position (13) einnimmt.

4. Fahrerkabine nach Anspruch 3,
**dadurch gekennzeichnet, dass**
die Einstiegsseinrichtung (7) einen Klappmechanismus für das Stufenteil (8) aufweist, um die Schutzstellung (15) oder die Trittstellung (18) bereitzustellen.

5. Fahrerkabine nach Anspruch 3,
**dadurch gekennzeichnet, dass**
die Einstiegsseinrichtung (7) einen Drehmechanismus für das Stufenteil (8) aufweist, um die Schutzstellung (15) oder die Trittstellung (18) bereitzustellen.

6. Fahrerkabine nach Anspruch 3,
**dadurch gekennzeichnet, dass**
die Einstiegsseinrichtung (7) einen Schiebemechanismus für das Stufenteil (8) aufweist, um die Schutzstellung (15) oder die Trittstellung (18) bereitzustellen.

7. Fahrerkabine nach Anspruch 3,
**dadurch gekennzeichnet, dass**
die Einstiegsseinrichtung (7) eine Kinematik aufweist, die mindestens zwei aus der Gruppe von Klappmechanismus, Drehmechanismus, Schwenkmechanismus oder Schiebemechanismus aufweist, um die Schutzstellung (15) oder Trittstellung (18) des Stufenteils (8) bereitzustellen.

8. Fahrerkabine nach einem der vorhergehenden Ansprüche,
**dadurch gekennzeichnet, dass**
die Einstiegseinrichtung (7) einen Einstiegsrahmen (16) aufweist, an dem mindestens ein Ansatz (19) vorgesehen ist, auf dem sich das Stufenteil (8) in der Trittstellung (18) abstützt.

9. Fahrerkabine nach einem der vorhergehenden Ansprüche,
**dadurch gekennzeichnet, dass**
die Einstiegseinrichtung (7) mehrere Stufenteile (8, 9, 10) aufweist.

10. Fahrerkabine nach einem der Ansprüche 3 bis 9,
**dadurch gekennzeichnet, dass**
die Fahrerkabine (2) mindestens einen Bowdenzug aufweist, der zwischen Fahrzeugtür (6) und Einstiegsseinrichtung (7) angeordnet ist und die Bewegung der Fahrzeugtür (6) mit einer Bewegung des Stufenteils (8) koppelt.

11. Fahrerkabine nach einem der vorhergehenden Ansprüche,
**dadurch gekennzeichnet, dass**
die Einstiegseinrichtung (7) eine Antriebsvorrichtung (21) zum Bewegen des Stufenteils (8) aufweist.

12. Fahrerkabine nach Anspruch 11,
**dadurch gekennzeichnet, dass**
die Antriebsvorrichtung der Einstiegseinrichtung (7) ein elektrisch, ein pneumatisch oder ein hydraulisch betreibbares Stellglied (23) aufweist.

13. Fahrerkabine nach einem der Ansprüche 10 bis 12,
**dadurch gekennzeichnet, dass**
unterhalb des Stufenteils (8) eine horizontale Welle (22) parallel zur Außenkontur (17) angeordnet ist, die mit dem Stufenteil (8) und mindestens einem Schwenkarm (25) starr verbunden ist, wobei der Schwenkarm (25) außerhalb des Trittbereichs des Stufenteils (8) angeordnet ist und mit der Antriebsvorrichtung (21) oder dem Bowdenzug gelenkig verbunden ist.

14. Fahrerkabine nach einem der Ansprüche 2 bis 13,
**dadurch gekennzeichnet, dass**
die Schutzvorrichtung (11) ein Steuergerät aufweist, das mit der Einstiegseinrichtung (7) und der Fahrzeugtür (6) zusammenwirkt.

15. Fahrerkabine nach einem der vorhergehenden Ansprüche,
**dadurch gekennzeichnet, dass**
die Einstiegseinrichtung (7) einen Handlauf (26) als Einstiegshilfe aufweist, der im Bereich der Fahrerkabinenöffnung (5) angeordnet ist und in der ersten Position (12) der Fahrzeugtür (6) von dieser abgedeckt ist.

16. Fahrerkabine nach Anspruch 15,
**dadurch gekennzeichnet, dass**
der Handlauf (26) in der zweiten Position (13) der Fahrzeugtür (6) aus der Fahrerkabinenöffnung (5) ausschwenkbar ist.
